# EUROPÄISCHE PATENTSCHRIFT

(11) **EP 3 816 673 B1**
(45) Veröffentlichungstag und Bekanntmachung des Hinweises auf die Patenterteilung: **05.04.2023**
(21) Anmeldenummer: 19205909.5
(22) Anmeldetag: 29.10.2019
(51) Int. Cl.: G01V 3/10, G01V 3/38, G01N 27/90

(54) **VERFAHREN ZUM BETREIBEN EINES METALLDETEKTORS**
METHOD FOR OPERATING A METAL DETECTOR
PROCÉDÉ DE FONCTIONNEMENT D'UN DÉTECTEUR DE MÉTAUX

(43) Veröffentlichungstag der Anmeldung: 05.05.2021
(73) Patentinhaber: Sesotec GmbH, 94513 Schönberg (DE)
(72) Erfinder: SAMMER, Hermann, 94513 Schönberg (DE)
(74) Vertreter: Glück Kritzenberger Patentanwälte PartGmbB

(56) Entgegenhaltungen:
- EP-A2- 1 923 724
- WO-A1-2018/203055
- CN-A- 107 884 835
- US-A1- 2006 197 523

## Beschreibung

Die Erfindung betrifft ein Verfahren zum Betreiben eines Metalldetektors mit einer Detektoreinheit, die wenigstens eine Sendespule und wenigstens eine Empfangsspule aufweist. Die Sende- und Empfangsspule umgeben einen Förderbereich, z.B. ein Förderband für Produkte, wobei die Empfängerspule beim Durchlauf eines Produkts durch den Förderbereich in Antwort auf das Signal der Sendespule ein Produktsignal erzeugt. Der Metalldetektor weist weiterhin eine Steuerung mit einem Referenzspeicher zum Ablegen von Referenzdaten auf, wobei die Steuerung mittels eines Auswertealgorithmus die Unterscheidung zwischen Gut- und Schlechtprodukten anhand des Produktsignals unter Berücksichtigung der Referenzdaten vornimmt. Bei dem Metalldetektor werden üblicherweise zur Überprüfung seiner Funktion regelmäßig Testdurchläufe mit wenigstens einem Metalltestkörper durchgeführt, wobei beim Durchlaufen des Metalltestkörpers durch den Förderbereich von der Empfangsspule ein Testsignal generiert wird, welches bei einem funktionierenden Metalldetektor zu einer definierten Überschreitung der Referenzdaten führt und damit zu einer Schlechtprodukt-Bewertung.

Ein Verfahren der gattungsgemäßen Art ist aus der WO 2018/203055 A1 und der CN 107 884 835 A bekannt. Eine Vernetzung von Metalldetektoren mit einer zentralen Auswertung über ein soziales öffentliches Netzwerk ist in der US 2006/0197523 A1 als auch in der EP 1 923 724 A2 offenbart.

Es ist Aufgabe der Erfindung, ein derartiges Verfahren zum Betreiben eines Metalldetektors zu verbessern, um einen fälschlich ausgewiesenen Anteil an Schlechtprodukten zu verringern.

Diese Aufgabe wird durch ein Verfahren gemäß Anspruch 1 und durch einen Metalldetektor gemäß Anspruch 11 gelöst. Vorteilhafte Weiterbildungen sind Gegenstand der zugeordneten abhängigen Ansprüche.

Erfindungsgemäß wird das Testsignal und/oder das Produktsignal in Verbindung mit der zugehörigen Kennung des Metalltestkörpers oder Produkts einer Verarbeitungsvorrichtung als gekennzeichnete Daten zugeführt. Derartige gekennzeichnete Daten, besser bekannt als "Labeled Data", werden in der Regel über aufwendige Lernverfahren in speziellen Labors erstellt, um die Detektionsgenauigkeit des Metalldetektors zu verbessern, da die labeled Data die Signalabweichungen auf maschinen- und/oder produktspezifische Parameter und/oder auf Umweltparameter wiederspiegeln. Durch die labeled data können damit Signalabweichungen bewertet werden, die beruhen z.B. auf Produktgröße, Produkttemperatur, Konfiguration der Sende- und Empfangsspule, Umgebungstemperatur und Luftfeuchtigkeit. Aufgrund der Erfindung werden diese Labeled Data im Rahmen des normalen Betriebs eines Metalldetektors und insbesondere beim Testaudit erzeugt und geben somit laufend Informationen zur Verbesserung der charakteristischen Produkt- und Testsignale für die unterschiedlichen Metalldetektoren, ohne dass es hierzu separater teurer Testreihen im Labor bedarf. Die Verarbeitungsvorrichtung verarbeitet diese Labeled Data zu Aktualisierungsdaten, die dann in den Metalldetektoren zur Verbesserung der Referenzdaten verwendet werden und/oder zur Verbesserung des Auswertealgorithmus aufbereitet werden. Diese Aktualisierungsdaten werden dann an die Steuerung der Metalldetektoren zurücktransferiert. Es wird auf diese Weise ein System geschaffen, das von sich aus während des normalen Detektionsbetriebs Labeled Data über die Produkte und die Testkörper erzeugt, die von der Verarbeitungsvorrichtung somit genutzt werden können, um die Referenzdaten zu verbessern und/oder den Auswertealgorithmus an der Steuerung für eine verbesserte Produkt- und Schlechtproduktkennung zu verfeinern, was insbesondere bei Auswertealgorithmen anwendbar ist, die lernfähig sind bzw. die auf neuronalen Netzwerken basieren, auch genetische Algorithmen. Diese Labeled Data enthalten vorzugsweise zum einen das Test- oder Produktsignal selber und zum anderen Kennungen des Metalltestkörpers oder des Produkts, wie zum Beispiel Aussagen über die Qualität, zum Beispiel eine Bewertung. Eine derartige Aussage kann zum Beispiel sein, ob das Produkt okay ist, das heißt, ob es sich um ein Gutprodukt handelt, ob es Metall enthält, ob das Produkt zwar gut ist, aber beispielsweise in der Temperatur oder in der Zusammensetzung von den Normprodukten abweicht oder eventuell in seiner Form und/oder im Gewicht. Weiterhin können diese Kennzeichen, die in Verbindung mit den Test- oder Produktsignalen als Labeled Data gespeichert werden, Informationen darüber erhalten, ob und inwieweit das Testsignal von den herkömmlichen Testsignalen abweicht, über umweltspezifische Parameter, wie zum Beispiel die Temperatur oder die Luftfeuchtigkeit und natürlich die Art des Produktes.

Üblicherweise setzen Kl-Methoden maschinelles Lernen Tausende von Trainings- und Validierungsdaten voraus, die, wie oben bereits angesprochen wurde, in separaten Labors erzeugt werden müssen. Diese Daten werden nun während des Arbeitsprozesses mit den Metalldetektoren von sich aus erzeugt und tragen damit zu einer wesentlich verbesserten Produkt- und Schlechtprodukterkennung bei. Die vorliegende Erfindung stellt somit einen großen Fortschritt in dem Bereich des maschinellen Lernens im Bereich des maschinellen Lernens im Bereich von Metalldetektoren dar. Ein wesentlicher Aspekt hierbei besteht darin, dass sowohl das Testsignal verwendet wird, welches im Rahmen des Auditchecks Informationen in Verbindung mit einem Metalltestkörper ermöglicht, was später eine bessere Bestimmung von metallhaltigen Kontaminationen eines Produkts ermöglicht, zum anderen werden die Informationen aus dem Normalbetrieb an die Verarbeitungsvorrichtung weitergeleitet, was eine qualitativ verbesserte Aussage über einwandfreie, das heißt metallfreie, Produkte ermöglicht. Die in Verbindung mit den Labeled Data enthaltenen zusätzlichen Informationen erlauben es zudem der Verarbeitungsvorrichtung, die Test- oder Produktsignale im Rahmen einer verbesserten Erzeugung von Referenzwerten und/oder auch zur Überarbeitung des Algorithmus auszuwerten.

Gemäß der Erfindung enthält der Auswertealgorithmus zwei Unteralgorithmen, nämlich einen ersten unveränderlichen Algorithmus, dessen Daten aus einem bei der Inbetriebnahme des Metalldetektors importierten Datensatzes beruht, und einem zweiten Unteralgorithmus, dessen Daten die Aktualisierungsdaten berücksichtigt und dessen Algorithmus auf der Basis der Aktualisierungsdaten verändert wird. Der zweite Unteralgorithmus ist zum Beispiel ein lernfähiger Algorithmus, zum Beispiel basierend auf einem genetischen Netzwerk oder neuronalen Netzwerk, der hinsichtlich der Verknüpfungen der Neuronen oder der Bildung von nachfolgenden Genen die Aktualisierungsdaten berücksichtigt. Ein derartiges Verfahren ermöglicht es, den Metalldetektor ohne das Vorhandensein von gekennzeichneten Daten zu starten und mit zunehmender Bereitstellung von gekennzeichneten Daten und entsprechend der Bereitstellung von Aktualisierungsdaten den zweiten Unteralgorithmus zu optimieren und diesen zunehmend bzw. basierend auf einem Schwellenwert anstelle des ersten Algorithmus oder zusätzlich zum ersten Unteralgorithmus in Betrieb zu nehmen. Auf diese Weise wird mit zunehmender Laufzeit die Aussagegenauigkeit des Metalldetektors erhöht und andererseits ist der Metalldetektor bereits mit seiner Inbetriebnahme in der Lage, eine Detektion mit guter Genauigkeit vorzunehmen.

Der Auswertealgorithmus schaltet auf den zweiten Unteralgorithmus um, sobald die mit dem zweiten Unteralgorithmus erzielten Ergebnisse eine gewisse Qualität erreichen. Hierfür enthält der Auswertealgorithmus eine Bewertungsfunktion, die von dem ersten Unteralgorithmus auf den zweiten Unteralgorithmus umschaltet, wobei sie die Qualität der Aussageergebnisse des zweiten Unteralgorithmus als Kriterium für das Umschalten von dem ersten auf den zweiten Unteralgorithmus verwendet. Bei dieser Bewertung können auch die Ergebnisse des ersten Unteralgorithmus als Vergleichskriterium herangezogen werden.

Vorzugsweise werden der Verarbeitungsvorrichtung die Testsignale mehrerer unterschiedlicher Testkörper mit den zugehörigen unterschiedlichen Kennungen als gekennzeichnete Daten zugeführt. Dies erlaubt es, Informationen über verschiedene Arten von Metallverunreinigungen zu erhalten und im Bereich des maschinellen Lernens zur Verbesserung der Schlechtprodukterkennung in den Metalldetektoren zu verwenden, sei es durch eine Verbesserung der Referenzwerte und/oder durch eine Verbesserung des Auswertealgorithmus.

Vorzugsweise ist die Verarbeitungsvorrichtung in einer Cloud angeordnet, die mit mehreren Metalldetektoren über ein öffentliches Netzwerk verbunden ist. Da derartige öffentliche Netzwerke, wie zum Beispiel das Internet, kontinuierlich bestehen, ist es so möglich, die Labeled Data in Realzeit der in Verbindung mit einem Server angeordneten Verarbeitungsvorrichtung zuzuführen, die somit ständig aus einer Vielzahl unterschiedlicher Metalldetektoren an unterschiedlichen Standorten optimierte Aktualisierungsdaten für die Steuerung der Messdetektoren erzeugen kann.

In einer vorteilhaften Weiterbildung der Erfindung ist die Verarbeitungsvorrichtung in einem Edge-Gateway angeordnet, das mit mehreren Metalldetektoren über ein lokales Netzwerk verbunden ist. In diesem Fall ist das lokale Netzwerk beispielsweise aufrechterhalten von einer Firma, die die Metalldetektoren und/oder die Software der Metalldetektoren bereitstellt und eventuell diese pflegt. Der Vorteil dieses Verfahrens besteht darin, dass die eventuell sicherheitsrelevanten und geheimen Daten vom öffentlichen Netz separiert sind. Zum anderen können die Übertragungsprotokolle in einem lokalen Netz besser auf die beabsichtigte Verwendung der Übertragung der Produkt- und Testsignale bzw. der Rückübertragung der Aktualisierungsdaten spezifiziert werden.

Vorzugsweise ist der Auswertealgorithmus ein lernfähiger Algorithmus, und die von der Verarbeitungsvorrichtung zugeführten Aktualisierungsdaten werden zum Anlernen und Verbessern des Auswertealgorithmus verwendet. Auf diese Weise kann die Aussagegenauigkeit für Gutprodukte und Schlechtprodukte erheblich verbessert werden, wobei aufgrund der Masse an anfallenden Daten bereits eine deutliche Verbesserung schon nach kurzer Zeit erzielt werden kann.

In einer vorteilhaften Weiterbildung enthält der lernfähige Algorithmus ein neuronales Netz, und die von der Verarbeitungsvorrichtung zugeführten Aktualisierungsdaten enthalten Lerndaten für die Gewichtungen und/oder die Verbindungen zwischen den Neuronen und/oder die Aktivität der Neuronen. Auf diese Weise können die anfangs gesetzten Daten des neuronalen Netzes schnell in Richtung auf eine effizientere Auswertung optimiert werden.

In einer vorteilhaften Weiterbildung der Erfindung enthalten die gekennzeichneten Daten das Datum der Signalgenerierung, was es ermöglicht, chronologisch die Weiterentwicklung der Daten zu dokumentieren und zurückzuverfolgen.

Vorzugsweise enthalten die gekennzeichneten Daten physikalische Umstände der Signalgenerierung, wie zum Beispiel die Temperatur, eventuell die Luftfeuchtigkeit und/oder Informationen über die Konfiguration des Metalldetektors. Die gekennzeichneten Daten bzw. Labeled Data können so zielgerichteter zu

Aktualisierungsdaten verarbeitet werden, und es ist möglich, die Aktualisierungsdaten derart zu optimieren, dass diese unterschiedliche Rahmenbedingungen aufgrund von physikalischen Umständen oder der Konfiguration des Metalldetektors berücksichtigt.

Weiterhin ist es vorteilhaft, wenn die gekennzeichneten Daten Produktinformationen, wie zum Beispiel das Produktgewicht und/oder die Produkttemperatur und/oder die Form des Produktes, enthalten. Auch diese Parameter können bei der Bildung der Aktualisierungsdaten berücksichtigt werden und können so für eine optimierte Produktbewertung herangezogen werden. Selbstverständlich sind hierfür entsprechende sensorische Anpassungen notwendig. Zur Erfassung des Produktgewichtes muss zum Beispiel eine Waage im Förderbereich vorgesehen sein, deren Signale dem Auswertealgorithmus bzw. der Steuerung des Metalldetektors zugeführt werden. Das Gleiche gilt für ein digitales Thermometer, das die Temperaturdaten an die Steuerung des Metalldetektors übermittelt.

In einer vorteilhaften Weiterbildung der Erfindung wird ein Produkt nur dann als Schlechtprodukt bewertet, wenn zumindest einer von beiden Unteralgorithmen es als Schlechtprodukt identifiziert. Ein derartiges Vorgehen würde auf eine minimale Fehlausschleuserate zielen und basiert auf der Annahme, dass, wenn einer der beiden Unteralgorithmen ein Produkt als Gutprodukt identifiziert, das Produkt dann auch ein Gutprodukt ist.

Ein anderer Ansatz zielt auf eine maximale Sicherheit. Dieser Ansatz sieht vor, dass beide Unteralgorithmen ein Produkt als Gutprodukt identifizieren müssen, damit es auch als Gutprodukt akzeptiert wird. Die Fehlausschleuserate bei einem derartigen Ansatz ist zwar höher, aber die Sicherheit, dass das Produkt tatsächlich fehlerfrei ist, ist deutlich höher.

Die Erfindung zielt ebenfalls auf einen Metalldetektor, gemäß Anspruch 11.

Die Erfindung betrifft in gleicher Weise eine Anordnung zur Durchführung des oben genannten Verfahrens, die mehrere vorgenannte Metalldetektoren umfasst. Die Anordnung enthält weiterhin eine Verarbeitungsvorrichtung, die über ein Netzwerk, das heißt ein öffentliches oder lokales Netzwerk, mit den Metalldetektoren verbunden oder verbindbar ist. Die Verbindung muss nicht ständig aufrechterhalten werden, sondern kann auch auf Anfrage kurzzeitig eingeschaltet werden. Vorteilhaft ist wegen der geringeren Signallaufzeiten natürlich eine ständige Verbindung.

Die Verarbeitungsvorrichtung ist konzipiert, von den Metalldetektoren über das Netzwerk übermittelte gekennzeichnete Daten - oder auch Labeled Data - in Aktualisierungsdaten zur Verbesserung der Referenzdaten und/oder zur Verbesserung des Auswertungsalgorithmus aufzubereiten. Weiterhin ist die Verarbeitungsvorrichtung konzipiert, die Aktualisierungsdaten an die Metalldetektoren über das Netzwerk zu übertragen. Eine derartige Anordnung ist in der Lage, im laufenden Betrieb der Metalldetektoren Produktsignale und Testsignale in Verbindung mit begleitenden Merkmalen als Labeled Data der Verarbeitungsvorrichtung zuzuführen und aufbereitete Aktualisierungsdaten von der Verarbeitungsvorrichtung über das Netzwerk an die Metalldetektoren zurück zu übertragen, um deren Detektionsgenauigkeit zu verbessern.

Es ist für den Fachmann offensichtlich, dass die oben genannten Ausführungsformen der Erfindung in beliebiger Weise miteinander kombiniert werden können.

Folgende Ausdrücke werden synonym verwendet: gekennzeichnete Daten - Labeled Data;
Die Erfindung wird nachfolgend beispielsweise anhand eines Ausführungsbeispiels beschrieben. In diesem zeigen:
- Fig. 1: eine schematische Ansicht eines Metalldetektors mit einer Produkttrennweiche, welche eine Steuerung aufweist, die über ein lokales Netzwerk mit einer Verarbeitungsvorrichtung verbunden ist, und
- Fig. 2: eine schematische Ansicht der Verarbeitungsvorrichtung, die über ein lokales oder öffentliches Netzwerk mit mehreren Metalldetektoren gemäß Fig. 1 verbunden sind.

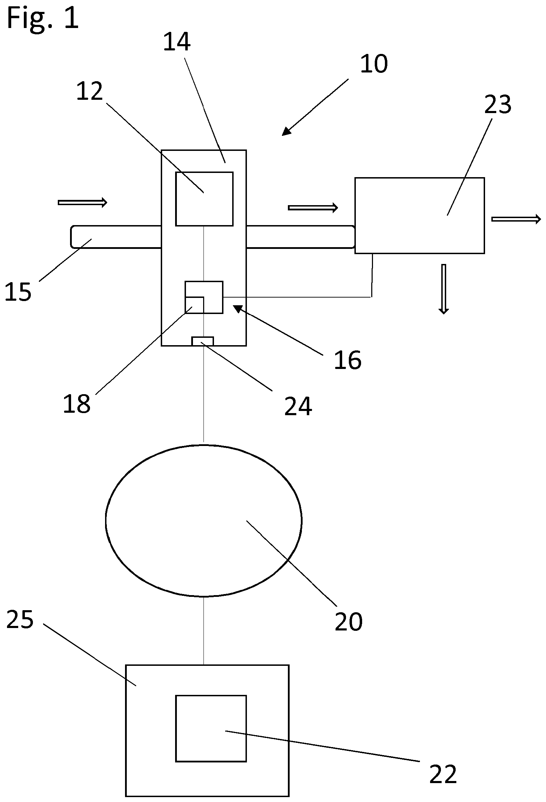

Fig. 1 zeigt einen Metalldetektor 10 mit einer Detektoreinheit 12, welche in einem Detektorgehäuse 14 angeordnet ist. Die Detektoreinheit 12 enthält wenigstens eine Senderspule und wenigstens eine Empfängerspule, die beide mit einer Steuerung 16 verbunden sind. Die Steuerung enthält einen Auswertealgorithmus 18 und ist über ein lokales oder öffentliches Netzwerk 20 mit einer Verarbeitungsvorrichtung 22 verbunden. Die Steuerung 16 des Metalldetektors 10 ist des Weiteren mit einer Produktweiche 23 verbunden, die in Abhängigkeit von dem Ausgangssignal der Steuerung 16 ein Produkt als Gutprodukt weiterführt oder als Schlechtprodukt ausscheidet. Eine derartige Produktweiche 23 kann beispielsweise eine Blasvorrichtung oder eine betätigbare Klappe sein, mit der ein Schlechtprodukt aus dem Gutproduktstrom ausgesondert wird.

Während des Betriebs des Metalldetektors 10 erzeugt die Detektoreinheit 12 Produktsignale, welche von der Steuerung 16 in Verbindung mit physikalischen Umständen der Signalgenerierung, beispielsweise Informationen über die Konfiguration des Metalldetektors, Temperatur oder Luftfeuchtigkeit, Produktbeschaffenheit als Labeled Data über das Netzwerk 20 an die Verarbeitungsvorrichtung 22 übermittelt.

Des Weiteren werden im Rahmen eines "Auditchecks" Testkörper, das heißt definierte Metalltestkörper, auf das Förderband 15 gelegt, das den Metalldetektor 10 durchläuft, welche zu Testsignalen des Metalldetektors 10 führen, die wiederum in Verbindung mit den korrespondierenden physikalischen Daten als Labeled Data der Verarbeitungsvorrichtung 22 zugeführt werden. Diese regelmäßig durchgeführten "Auditchecks" werden teilweise gefordert, um die Zuverlässigkeit des Betriebs des Metalldetektors zu verifizieren, was bei der Lebensmittelprüfung wichtig ist.

Sowohl die Produktsignale als auch die Testsignale werden somit bei einem herkömmlichen Betrieb des Metalldetektors laufend erzeugt. Gemäß der Erfindung werden diese Signale mit zugehörigen produktbezogenen, maschinenbezogenen oder umweltbezogenen Charakteristika als Labeled Data ständig der Verarbeitungsvorrichtung zugeführt, welche wiederum aus diesen Daten Aktualisierungsdaten generiert. Die Aktualisierungsdaten werden von der Verarbeitungsvorrichtung 22 wiederum über das öffentliche oder lokale Netzwerk 20 der Steuerung 16 bzw. deren Auswertealgorithmus 18 zugeführt. Der Auswertealgorithmus 18 verwendet diese Aktualisierungsdaten in Form von verbesserten Referenzdaten und/oder in Form von Lerndaten für einen eigenen maschinenlernbaren Algorithmus, um schließlich die Auswertegenauigkeit zwischen Gut- und Schlechtprodukten zu verbessern.

Die Erfindung bietet somit die Möglichkeit, ständig im Betrieb des Metalldetektors Labeled Data zu erzeugen und diese zur Verbesserung der Detektionsgenauigkeit der eigenen Metalldetektoren 10 zu verwenden. Hierfür hat die Steuerung 18 eine Eingangs-Ausgangs-Schnittstelle 24 ebenso wie die Verarbeitungsvorrichtung 22, die vorzugsweise in einem Edge-Gateway-Server 25 angeordnet ist, der wiederum mit dem Netzwerk 20 verbunden ist.

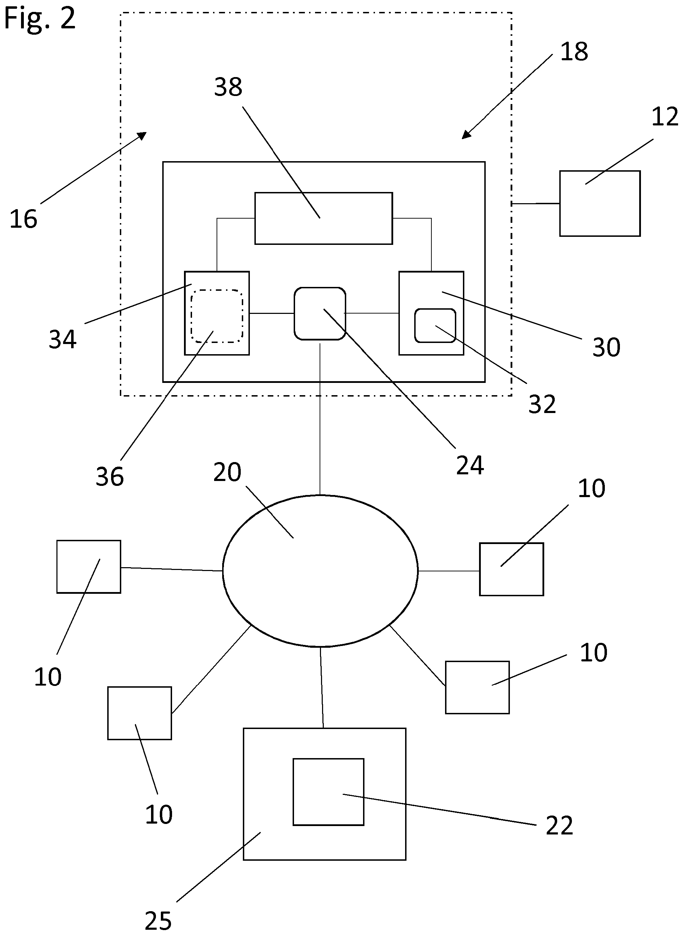

Fig. 2 zeigt einen Ausschnitt des Metalldetektors 10 gemäß Figur 1, der besonders vorteilhaft für die Verbesserung der eigenen Detektionsgenauigkeit konzipiert ist. Dargestellt ist die Steuerung 16 des Metalldetektors 10. Dieser enthält einen ersten Unteralgorithmus 30 mit einem Referenzdatenspeicher 32, der mit der Inbetriebnahme des Metalldetektors angelernte Daten, insbesondere Referenzdaten für den Betrieb des Metalldetektors erhält, welche angelernten Daten dem ersten Unteralgorithmus 30 eine gute Unterscheidung zwischen Gutprodukten und Schlechtprodukten ermöglichen.

Des Weiteren enthält die Steuerung 16 einen zweiten Unteralgorithmus 34 mit einer adaptierbaren Verknüpfungsdatenbank 36, die zum Beispiel Operationen in der genetischen Abfolge eines genetischen Algorithmus und/oder Verknüpfungsdaten der Neuronen einen neuronalen Netzes enthält. Die beiden Unteralgorithmen 30, 34 sind mit einer Bewertungseinheit 38 verbunden, die im laufenden Betrieb die Ergebnisse der beiden Unteralgorithmen 30, 34 auswertet und am Ende entscheidet, welches Ausgangssignal zur Bewertung des Produkts verwendet wird. Die im laufenden Betrieb anfallenden Produktsignale, das heißt die Signale der Detektoreinheit 12 beim Durchlaufen eines Gutprodukts, und die Testsignale, das heißt die von der Detektoreinheit 12 erzeugten Signale beim Durchlauf eines Testkörpers, werden in der Steuerung 16 mit den zugehörigen physikalischen Daten und Konfigurationsdaten des Metalldetektors über eine Schnittstelle 24 der Steuerung und das lokale oder öffentliche Netzwerk 20 dem Edge-Gateway-Server 25 mit der Verarbeitungsvorrichtung 22 zugeführt. Diese verarbeitet die Labeled Data zu Aktualisierungsdaten, welche über das Netzwerk 20 und die Schnittstelle 24 den beiden Unteralgorithmen 30, 34 zur Verbesserung ihrer Referenzdaten zugeführt werden. Des Weiteren verwendet der zweite Unteralgorithmus 34 die Aktualisierungsdaten zur Verbesserung der Verknüpfungen und Parameter seiner Verknüpfungsdatenbank 36, z.B. die Verknüpfungen und Aktivitäten der Neuronen eines neuronalen Netzwerks oder genetischen Algorithmus. Auf diese Weise hat der zweite Unteralgorithmus nicht nur eine verbesserte Detektion über die verbesserten Referenzwerte, sondern auch sein eigene lernfähige Verknüpfungsdatenbank wird aktualisiert und damit der Algorithmus selbst verbessert, womit die Detektionsergebnisse des zweiten Unteralgorithmus im Vergleich zum ersten Unteralgorithmus 30 immer besser werden.

Die Bewertungseinheit 38 bewertet und eventuell vergleicht die Ergebnisse der beiden Unteralgorithmen 30, 34 und verwendet ab einem bestimmten Zeitpunkt, nämlich wenn die Auswerteergebnisse des zweiten Unteralgorithmus 34, zum Beispiel im Vergleich zu den Auswerteergebnissen des ersten Unteralgorithmus 30, eine gewisse Qualität oder Präzision erhalten, nur noch die Ergebnisse des zweiten Unteralgorithmus 34. Am Anfang, wenn die lernfähige Verknüpfungsdatenbank 36 des zweiten Unteralgorithmus noch nicht mit Aktualisierungsdaten angelernt ist, werden die Ergebnisse des ersten Unteralgorithmus 30 verwendet, der in der Regel nicht lernfähig ist. Es ist alternativ natürlich auch möglich, ständig die Ergebnisse beider Unteralgorithmen bei der Ansteuerung der Produktweiche 23 zu berücksichtigen, um auf diese Weise eine höhere Sicherheit bei der Gut- und Schlechtprodukterkennung zu realisieren.

Die Erfindung ist nicht auf das oben beschriebene Ausführungsbeispiel beschränkt, sondern kann innerhalb des Schutzbereichs der beiliegenden Schutzansprüche beliebig variiert werden.

### Bezugszeichenliste:

- 10: Metalldetektor
- 12: Detektoreinheit
- 14: Gehäuse des Metalldetektors
- 15: Fördereinrichtung - Förderband durch den Metalldetektor
- 16: Steuerung
- 18: Auswertealgorithmus
- 20: öffentliches oder lokales Netzwerk
- 22: Verarbeitungsvorrichtung
- 23: Produktweiche
- 24: Schnittstelle der Steuerung zum Netzwerk
- 25: Edge-Gateway Server
- 30: erster Unteralgorithmus
- 32: Referenzdatenspeicher mit angelernten Daten
- 34: zweiter Unteralgorithmus
- 36: Verknüpfungsdatenbank des maschinenlernenden zweiten Unteralgorithmus
- 38: Bewertungseinheit

## Patentansprüche

1. Verfahren zum Betreiben eines Metalldetektors (10), welcher eine Detektoreinheit (12) mit wenigstens einer Sendespule und wenigstens eine Empfangsspule aufweist, welche eine Fördereinrichtung (15) für Produkte umgeben, wobei die Empfängerspule beim Durchlauf eines Produkts durch den Detektionsbereich der Detektoreinheit (12) ein Produktsignal erzeugt, welcher Metalldetektor (10) weiterhin eine Steuerung (16) mit einem Referenzspeicher zum Ablegen von Referenzdaten aufweist, wobei die Steuerung (16) mittels eines Auswertungsalgorithmus (18) die Unterscheidung zwischen Gut- und Schlechtprodukten anhand des Produktsignals unter Berücksichtigung der Referenzdaten vornimmt, in welchem Metalldetektor (10) weiterhin zur Überprüfung seiner Funktion regelmäßig Testdurchläufe mit wenigstens einem Metalltestkörper durchgeführt werden, wobei das beim Durchlauf des Metalltestkörpers durch den Detektionsbereich der Detektoreinheit (12) von der Empfangsspule generierte Testsignal bei funktionierendem Metalldetektor (10) zu einer definierten Überschreitung der Referenzdaten führt, und damit eine Schlechtprodukt-Bewertung auslöst, wobei das generierte Testsignal und/oder das Produktsignal in Verbindung mit der zugehörigen Kennung des Metalltestkörpers/Produkts einer Verarbeitungsvorrichtung (22) als gekennzeichnete Daten zugeführt wird/werden, welche Verarbeitungsvorrichtung (22) die gekennzeichneten Daten zu Aktualisierungsdaten zur Verbesserung der Referenzdaten und/oder zur Verbesserung des Auswertungsalgorithmus (18) aufbereitet, und dass die Aktualisierungsdaten an die Steuerung (16) des Metalldetektors (10) transferiert werden, **dadurch gekennzeichnet, dass** der Auswertealgorithmus (18) zwei Unteralgorithmen (30, 34) aufweist, nämlich einen ersten unveränderlichen Unteralgorithmus (30), dessen Daten in einem bei der Inbetriebnahme des Metalldetektors (10) angelernten Referenzdatenspeicher (32) liegen, und einen zweiten Unteralgorithmus (34), dessen Verknüpfungsdatenbank (36) die Aktualisierungsdaten berücksichtigt und der auf der Basis der Verknüpfungsdatenbank (36) verändert wird, und dass der Auswertealgorithmus (18) eine Bewertungsfunktion (38) verwendet, um die Produktbewertung von dem ersten Unteralgorithmus (30) auf den zweiten Unteralgorithmus (34) umzuschalten.

2. Verfahren nach Anspruch 1, **dadurch gekennzeichnet, dass** der Verarbeitungsvorrichtung (22) die Testsignale mehrerer unterschiedlicher Testkörper mit den zugehörigen unterschiedlichen Kennungen als gekennzeichnete Daten zugeführt werden.

3. Verfahren nach Anspruch 1 oder 2, **dadurch gekennzeichnet, dass** die Verarbeitungsvorrichtung (22) in einer Cloud oder einem Server angeordnet ist, die/der mit mehreren Metalldetektoren (10) über ein öffentliches Netzwerk (20) verbunden ist.

4. Verfahren nach Anspruch 1, 2 oder 3, **dadurch gekennzeichnet, dass** die Verarbeitungsvorrichtung (22) in einem Edge-Gateway Server (25) angeordnet ist, der mit mehreren Metalldetektoren über ein lokales Netzwerk (20) verbunden ist.

5. Verfahren nach einem der vorhergehenden Ansprüche, **dadurch gekennzeichnet, dass** der Auswertealgorithmus (18) ein lernfähiger Algorithmus ist, und dass die von der Verarbeitungsvorrichtung (22) zugeführten Aktualisierungsdaten zum Anlernen und Verbessern des Auswertealgorithmus (18) verwendet werden.

6. Verfahren nach Anspruch 5, **dadurch gekennzeichnet, dass** der lernfähige Algorithmus (18) ein neuronales Netz oder genetischen Algorithmus enthält, und dass die von der Verarbeitungsvorrichtung zugeführten Aktualisierungsdaten Lerndaten für die Gewichtungen und/oder die Verbindungen zwischen den Neuronen/Generationen enthalten.

7. Verfahren nach einem der vorhergehenden Ansprüche, **dadurch gekennzeichnet, dass** die gekennzeichneten Daten das Datum der Signalgenerierung enthalten.

8. Verfahren nach einem der vorhergehenden Ansprüche, **dadurch gekennzeichnet, dass** die gekennzeichneten Daten physikalische Umstände der Signalgenerierung, wie z.B. die Temperatur und/oder Informationen über die Konfiguration des Metalldetektors (10) enthalten.

9. Verfahren nach einem der vorhergehenden Ansprüche, **dadurch gekennzeichnet, dass** die gekennzeichneten Daten Produktinformationen wie z.B. das Produktgewicht und/oder die Produkttemperatur enthalten.

10. Verfahren nach einem der vorhergehenden Ansprüche, **dadurch gekennzeichnet, dass** ein Produkt nur dann als Schlechtprodukt bewertet wird, wenn zumindest einer von beiden Unteralgorithmen (30, 34) es als Schlechtprodukt identifizieren.

11. Metalldetektor (10), der eine Detektoreinheit (12) mit mindestens einer Sendespule und mindestens einer Empfangsspule aufweist, die eine Fördereinrichtung (15) für Produkte umgeben, wobei die Empfangsspule beim Durchlauf eines Produktes durch den Detektionsbereich der Detektoreinheit (12) ein Produktsignal erzeugt, wobei der Metalldetektor (10) ferner eine Steuerung (16) mit einem Referenzspeicher zum Ablegen von Referenzdaten aufweist, wobei die Steuerung (16) mittels eines Auswertealgorithmus (18), der zur Durchführung des Verfahrens nach einem der vorhergehenden Ansprüche ausgebildet ist, die Unterscheidung zwischen Gut- und Schlechtprodukten vornimmt, dass die Steuerung (16) ferner eine Ausgangsschnittstelle (24) zu einer Verarbeitungseinrichtung (22) umfasst, um dieser genkennzeichnete Daten zuzuführen, und dass die Steuerung (16) eine Eingangsschnittstelle (24) aufweist, um über diese von der Verarbeitungseinrichtung (22) Aktualisierungsdaten auf Basis der gekennzeichneten Daten zur Verbesserung der Referenzdaten und/oder zur Verbesserung des Auswertealgorithmus (18) zu erhalten, und dass der Auswertealgorithmus (18) dazu ausgebildet ist, die Aktualisierungsdaten bei der Erzeugung der Referenzdaten und/oder bei seiner Aktualisierung zu berücksichtigen, **dadurch gekennzeichnet, dass** der Auswertealgorithmus (18) zwei Teilalgorithmen (30, 34) umfasst, nämlich einen ersten unveränderlichen Teilalgorithmus (30), dessen Daten in einem bei der Inbetriebnahme des Metalldetektors (10) eingelernten Referenzdatenspeicher (32) gespeichert sind, und einen zweiten Teilalgorithmus (34), dessen Verknüpfungsdatenbank (36) die Aktualisierungsdaten berücksichtigt und der auf der Basis der Verknüpfungsdatenbank (36) modifiziert wird, umfasst, und dass der Auswertealgorithmus (18) mittels einer Auswertefunktion (38) die Produktauswertung von dem ersten Teilalgorithmus (30) auf den zweiten Teilalgorithmus (34) umschaltet.

12. Anordnung geeignet zur Durchführung des Verfahrens nach einem der Ansprüche 1 bis 10, umfassend mehrere Metalldetektoren (10) nach Anspruch 11 und wenigstens eine Verarbeitungsvorrichtung (22), die über ein Netzwerk (20) mit den Metalldetektoren (10) verbunden/verbindbar ist, welche Verarbeitungsvorrichtung (22) konzipiert ist, von den Metalldetektoren (10) über das Netzwerk (20) übermittelte gekennzeichnete Daten in Aktualisierungsdaten zur Verbesserung der Referenzdaten und/oder zur Verbesserung des Auswertungsalgorithmus (18) aufzubereiten, und die Aktualisierungsdaten an die Metalldetektoren (10) über das Netzwerk (20) zu übertragen.

## Claims

1. A method for operating a metal detector (10), which has a detector unit (12) with at least one transmitting coil and at least one receiving coil, which surround a conveying apparatus (15) for products, the receiving coil generating a product signal when a product passes through the detection region of the detector unit (12), which metal detector (10) furthermore has a controller (16) with a reference memory for storing reference data, the controller (16) differentiating between good and bad products by means of an evaluation algorithm (18) using the product signal and taking into account the reference data, in which metal detector (10) test runs are also carried out regularly with at least one metal test body in order to check the function of the metal detector, wherein the test signal generated by the receiving coil when the metal test body passes through the detection region of the detector unit (12) leads to a defined exceeding of the reference data and thus triggers a bad product assessment if the metal detector (10) is functioning, wherein the generated test signal and/or the product signal in conjunction with the associated identifier of the metal test body/product is/are supplied as labelled data to a processing device (22), which processing device (22) processes the labelled data into update data for improving the reference data and/or for improving the evaluation algorithm (18), and the update data are transferred to the controller (16) of the metal detector (10), **characterised in that** the evaluation algorithm (18) has two sub-algorithms (30, 34), specifically a first unchangeable sub-algorithm (30), the data of which is located in a reference data memory (32) trained during commissioning of the metal detector (10), and a second sub-algorithm (34), the link database (36) of which takes into account the update data and which is changed on the basis of the link database (36), and that the evaluation algorithm (18) uses an assessment function (38) in order to switch the product assessment from the first sub-algorithm (30) to the second sub-algorithm (34).

2. The method according to Claim 1, **characterised in that** the processing device (22) is supplied with the test signals of multiple different test bodies with the associated different identifiers as labelled data.

3. The method according to Claim 1 or 2, **characterised in that** the processing device (22) is situated in a cloud or a server which is connected to multiple metal detectors (10) via a public network (20).

4. The method according to Claim 1, 2 or 3, **characterised in that** the processing device (22) is situated in an edge gateway server (25) which is connected to multiple metal detectors via a local network (20).

5. The method according to any one of the preceding claims, **characterised in that** the evaluation algorithm (18) is an adaptive algorithm, and that the update data supplied by the processing device (22) is used for training and improving the evaluation algorithm (18).

6. The method according to Claim 5, **characterised in that** the adaptive algorithm (18) contains a neural network or genetic algorithm, and that the update data supplied by the processing device contains learning data for the weights and/or the connections between the neurons/generations.

7. The method according to any one of the preceding claims, **characterised in that** the labelled data contains the date of the signal generation.

8. The method according to any one of the preceding claims, **characterised in that** the labelled data contains physical conditions of the signal generation, such as the temperature and/or information about the configuration of the metal detector (10).

9. The method according to any one of the preceding claims, **characterised in that** the labelled data contains product information such as the product weight and/or the product temperature.

10. The method according to any one of the preceding claims, **characterised in that** a product is assessed as a bad product only when at least one of the two sub-algorithms (30, 34) identify it as a bad product.

11. A metal detector (10), which has a detector unit (12) with at least one transmitting coil and at least one receiving coil, which surround a conveying apparatus (15) for products, the receiving coil generating a product signal when a product passes through the detection region of the detector unit (12), the metal detector (10) further having a controller (16) with a reference memory for storing reference data, the controller (16) differentiating between good and bad products by means of an evaluation algorithm (18) which is designed to carry out the method according to any one of the preceding claims, the controller (16) further comprising an output interface (24) to a processing device (22) in order to supply labelled data to same, and the controller (16) having an input interface (24) in order to receive, from the processing device (22) via the input interface, update data on the basis of the labelled data for improving the reference data and/or for improving the evaluation algorithm (18), and the evaluation algorithm (18) being designed to take into account the update data during generation of the reference data and/or during updating of the evaluation algorithm, **characterised in that** the evaluation algorithm (18) comprises two part-algorithms (30, 34), specifically a first unchangeable part-algorithm (30), the data of which is stored in a reference data memory (32) trained during commissioning of the metal detector (10), and a second part-algorithm (34), the link database (36) of which takes into account the update data and which is modified on the basis of the link database (36), and that the evaluation algorithm (18) switches the product evaluation from the first part-algorithm (30) to the second part-algorithm (34) by means of an evaluation function (38).

12. An arrangement suitable for carrying out the method according to one of Claims 1 to 10, comprising multiple metal detectors (10) according to Claim 11 and at least one processing device (22), which is connected or can be connected to the metal detectors (10) via a network (20), which processing device (22) is designed to process labelled data transmitted from the metal detectors (10) via the network (20) into update data for improving the reference data and/or for improving the evaluation algorithm (18), and to transfer the update data to the metal detectors (10) via the network (20).

## Revendications

1. Procédé de fonctionnement d'un détecteur de métaux (10), qui présente une unité de détection (12) avec au moins une bobine émettrice et au moins une bobine réceptrice, qui entourent un dispositif de transport (15) de produits, dans lequel la bobine réceptrice lors du passage d'un produit à travers la zone de détection de l'unité de détection (12) génère un signal de produit, lequel détecteur de métal (10) présente en outre une unité de commande (16) avec une mémoire de référence pour mémoriser des données de référence, dans lequel l'unité de commande (16) au moyen d'un algorithme d'évaluation (18) entreprend la différenciation entre bons et mauvais produits en fonction du signal de produit en prenant en compte les données de référence, dans lequel détecteur de métal (10) en outre des essais réguliers sont régulièrement effectués avec au moins un corps de test métallique pour vérifier son fonctionnement, dans lequel le signal de test généré par la bobine réceptrice lorsque le corps de test métallique traverse le zone de détection de l'unité de détection (12) pendant que le détecteur de métaux (10) fonctionne conduit à un dépassement défini des données de référence et déclenche ainsi une mauvaise évaluation du produit, dans lequel le signal de test et/ou le signal de produit généré en liaison avec l'identifiant associé du corps de test métallique / produit est/sont fourni(s) au dispositif de traitement (22) comme des données marquées, lequel dispositif de traitement (22) traite les données marquées en données de mise à jour pour améliorer les données de référence et/ou pour améliorer l'algorithme d'évaluation (18), et que les données de mise à jour sont transférées à l'unité de commande (16) du détecteur de métaux (10), **caractérisé en ce que** l'algorithme d'évaluation (18) présente deux sous-algorithmes (30, 34), à savoir un premier sous-algorithme non modifiable (30), dont les données sont apprises dans une mémoire de données de référence (32) lorsque le détecteur de métaux (10) est mis en service, et un deuxième sous-algorithme (34), dont la base de données de liens (36) prend en compte les données de mise à jour et est modifiée sur la base de la base de données de liens (36), et que l'algorithme d'évaluation (18) utilise une fonction d'évaluation (38) pour basculer l'évaluation du produit du premier sous-algorithme (30) au deuxième sous-algorithme (34).

2. Procédé selon la revendication 1, **caractérisé en ce que** dans le dispositif de traitement (22) sont introduits des signaux de test de plusieurs corps de test différents avec les différents identifiants associés sous forme de données marquées.

3. Procédé selon la revendication 1 ou 2, **caractérisé en ce que** le dispositif de traitement (22) est disposé dans un cloud ou un serveur, qui est connecté à plusieurs détecteurs de métaux (10) via un réseau public (20).

4. Procédé selon la revendication 1, 2 ou 3, **caractérisé en ce que** le dispositif de traitement (22) est agencé dans un serveur passerelle périphérique (25), qui est connecté à une pluralité de détecteurs de métaux via un réseau local (20).

5. Procédé selon une quelconque des revendications précédentes, **caractérisé en ce que** l'algorithme d'évaluation (18) est un algorithme adaptatif, et que les données de mise à jour introduites dans le dispositif de traitement (22) sont utilisées pour l'apprentissage et l'amélioration de l'algorithme d'évaluation (18).

6. Procédé selon la revendication 5, **caractérisé en ce que** l'algorithme adaptatif (18) contient un réseau de neurones ou algorithme génétique, et que les données de mise à jour introduites dans le dispositif de traitement (22) contiennent des données d'apprentissage pour les pondérations et/ou les connexions entre les neurones/générations.

7. Procédé selon une quelconque des revendications précédentes, **caractérisé en ce que** les données marquées contiennent la date de génération du signal.

8. Procédé selon une des revendications précédentes, **caractérisé en ce que** les données marquées contiennent des circonstances physiques de la génération du signal, telles que la température et/ou des informations sur la configuration du détecteur de métal (10).

9. Procédé selon une quelconque des revendications précédentes, **caractérisé en ce que** les données marquées contiennent des informations sur le produit telles que le poids du produit et/ou la température du produit.

10. Procédé selon une quelconque des revendications précédentes, **caractérisé en ce qu'**un produit n'est évalué comme mauvais produit que si au moins un des deux sous-algorithmes (30, 34) l'identifie comme un mauvais produit.

11. Détecteur de métaux (10), qui présente une unité de détection (12) avec au moins une bobine émettrice et au moins une bobine réceptrice, qui entourent un dispositif de transport (15) de produits, dans lequel la bobine réceptrice lors du passage d'un produit à travers la zone de détection de l'unité de détection (12) génère un signal de produit, dans lequel le détecteur de métal (10) présente en outre une unité de commande (16) avec une mémoire de référence pour mémoriser des données de référence, dans lequel l'unité de commande (16) au moyen d'un algorithme d'évaluation (18) qui est conçu pour la mise en oeuvre du procédé selon l'une des revendications précédentes entreprend la différenciation entre bons et mauvais produits, en ce que l'unité de commande (16) comprend en outre une interface de sortie (24) vers un dispositif de traitement (22), pour introduire dans celui-ci des données marquées, et en ce que l'unité de commande (16) présente une interface d'entrée (24), pour obtenir via celle-ci par le dispositif de traitement (22) des données de mise à jour sur la base des données marquées pour améliorer les données de référence et/ou pour améliorer l'algorithme d'évaluation (18) et en ce que l'algorithme d'évaluation (18) est configuré pour prendre en compte les données de mise à jour lors de la génération des données de référence et/ou lors de sa mise à jour, **caractérisé en ce que** l'algorithme d'évaluation (18) présente deux sous-algorithmes (30, 34), à savoir un premier sous-algorithme non modifiable (30), dont les données sont apprises dans une mémoire de données de référence (32) lorsque le détecteur de métaux (10) est mis en service, et un deuxième sous-algorithme (34), dont la base de données de liens (36) prend en compte les données de mise à jour et est modifiée sur la base de la base de données de liens (36), et que l'algorithme d'évaluation (18) bascule au moyen d'une fonction d'évaluation (38) l'évaluation du produit du premier sous-algorithme (30) au deuxième sous-algorithme (34).

12. Agencement adapté à la mise en oeuvre du procédé selon une quelconque des revendications 1 à 10, comprenant une pluralité de détecteurs de métaux (10) selon la revendication 11 et au moins un dispositif de traitement (22), qui est connecté/connectable aux détecteurs de métaux (10) via un réseau (20), lequel dispositif de traitement (22) est conçu pour traiter les données marquées transmises aux détecteurs de métaux (10) via le réseau (20) en données de mise à jour pour améliorer les données de référence et/ou pour améliorer l'algorithme d'évaluation (18) et transmettre via le réseau (20) les données de mise à jour aux détecteurs de métaux (10).
